(19) Europäisches Patentamt / European Patent Office / Office européen des brevets

(11) **EP 2 862 003 B1**

(12) **EUROPEAN PATENT SPECIFICATION**

(45) Date of publication and mention of the grant of the patent:
**09.02.2022 Bulletin 2022/06**

(21) Application number: **13730054.7**

(22) Date of filing: **12.06.2013**

(51) International Patent Classification (IPC):
*G01S 13/89* (2006.01)     *G01V 3/12* (2006.01)

(52) Cooperative Patent Classification (CPC):
**G01V 3/12; G01S 7/411; G01S 13/89**

(86) International application number:
**PCT/GB2013/051545**

(87) International publication number:
**WO 2013/186559 (19.12.2013 Gazette 2013/51)**

(54) **METHODS FOR DETERMINING MATERIAL AND/OR SUBSURFACE COMPOSITION**

VERFAHREN ZUR BESTIMMUNG DER ZUSAMMENSETZUNG EINES MATERIALS UND/ODER EINES UNTERGRUNDS

PROCÉDÉS DE DÉTERMINATION DE LA COMPOSITION D'UN MATÉRIAU ET/OU D'UNE SURFACE SOUTERRAINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2012 GB 201210480**

(43) Date of publication of application:
**22.04.2015 Bulletin 2015/17**

(73) Proprietor: **Adrok Ltd.**
**Edinburgh EH6 5NX (GB)**

(72) Inventors:
• **STOVE, Gordon Douglas Colvin**
**Edinburgh**
**Lothian EH10 4PJ (GB)**
• **STOVE, George Colin**
**Edinburgh**
**Lothian EH14 1EU (GB)**
• **ROBINSON, Michael James**
**Edinburgh**
**Lothian EH15 1NY (GB)**

(74) Representative: **Murgitroyd & Company**
**Murgitroyd House**
**165-169 Scotland Street**
**Glasgow G5 8PL (GB)**

(56) References cited:
**WO-A1-01/18533     WO-A2-02/068994**

• **GORDON STOVE: "Atomic dielectric resonance scanning takes to the seas", OFFSHORE , vol. 71, no. 11 1 November 2011 (2011-11-01), pages 1-7, XP002722754, Retrieved from the Internet: URL:http://www.offshore-mag.com/articles/print/volume-71/issue-11/subsea/atomic-dielectric-resonance-scanning-takes-to-the-seas.html [retrieved on 2014-04-03]**
• **FAGGE TIMOTHY J ET AL: "Application of Atomic Dielectric Resonance Spectroscopy for the screening of blood samples from patients with clinical variant and sporadic CJD", JOURNAL OF TRANSLATIONAL MEDICINE, 30 August 2007 (2007-08-30), pages 1-9, XP021030187, BIOMED CENTRAL, LONDON, GB ISSN: 1479-5876, DOI: 10.1186/1479-5876-5-41**

**Description**

This invention relates to methods, apparatus, and computer code for determining composition of different materials, and in particular for producing Virtual Borehole logs, more particularly electromagnetic (EM) data from an EM field survey to provide a representation of the underlying geology of the surveyed region.

An article on atomic dielectric resonance scanning can be found in Offshore Magazine at: https://www.offshore-mag.com/articles/print/volume-71/issue-11/subsea/atomic-dielectric-resonance-scanning-takes-to-the-seas.html.

In a first aspect of the invention there is provided a method of determining subsurface composition of a surveyed region comprising the steps of:

using a transmitter to transmit a pulsed electromagnetic signal into the ground;
using a receiver to detect a return signal following interaction of said transmitted signal with features of the subsurface;
imaging a profile image of the subsurface (this may be in in one, two, three or four dimensions);
calculating one or more spectra of said return signal, said one or more spectra comprising at least a phase-frequency spectrum based upon the variation of phase of the return signal in the frequency domain and an energy-frequency spectrum;
analysing said one or more spectra to determine a characteristic energy-frequency signature and an energy-frequency signature for one or more layers of said subsurface, subsurface, said energy-frequency signature being defined by energy changes at more than 10 different harmonics for each of more than 10 derivatives of the energy-frequency spectrum, said energy-frequency signature being defined by the sign of the energy change at each of said harmonics;
comparing said determined signatures of the one or more layers to a database of equivalent signatures of known materials in order to determine a composition of said one or more layers.

Said profile image may be obtained by performing a profile scan wherein the transmit and detect steps are repeated at a plurality of different points over said subsurface, in each case said transmitter and receiver being maintained at a set separation.

Said method may comprise a further scan in order to obtain depth information for said profile image of the subsurface. Said further scan may comprise a Wide Angle Reflection and Refraction scan. This Wide Angle Reflection and Refraction scan may comprise repeating the transmit and detect steps at a plurality of different points over said subsurface, with each repetition being performed with either one of said transmitter and receiver being moved, and the other of said transmitter and receiver remaining stationary. Alternatively said scan may comprise a common midpoint scan wherein the transmit and detect steps are repeated with each repetition being performed with said transmitter and receiver being moved apart from one another in equal distance steps, or at equal velocities, from a common point. In either case the depth information may be obtained using ray tracing and/or Normal Move-out techniques. In one embodiment, both of these techniques are performed and subsurface features are only attributed with depth information when the solutions using both techniques are in correlation.

Said method comprises obtaining a phase-frequency spectrum based upon the variation of phase of the return signal in the frequency domain, and determining characteristic phase-frequency signatures. According to the invention, the calculation step provides both an energy-frequency spectrum, and a phase-frequency spectrum and said analysing step comprises analysing said energy-frequency spectrum and phase-frequency spectrum to obtain a characteristic energy-phase-frequency signature for one or more layers of said subsurface.

In one embodiment, said step of analysing said one or more spectra comprises performing a statistical analysis of said one or more spectra.

Said statistical analysis may include at least one of principal components analysis, maximum likelihood classification and multivariate classification. Said step of analysing said one or more spectra may comprise frequency classification using energy bins and/or frequency bins.

Said method may comprise performing a rank matching operation wherein each determined signature is compared against every other equivalent signature, and covariance and correlation matrices are computed.

Said energy-frequency signatures and/or phase-frequency signatures may be output as spectral lines and compared to a database of spectral lines in said comparison step.

Said method may further comprise building said database by performing said method on subsurfaces and/or material of known composition.

Said pulsed signal may be a broadband electromagnetic signal (such as radar frequencies, radiowaves, microwaves)..

Also described is a method of typecasting a subject comprising the steps of irradiating the subject with a pulsed signal transmitted by at least one transmitter antenna; detecting a return signal following interaction of said transmitted signal with said subject, using at least one receiver antenna; calculating a phase-frequency spectrum of said return signals; and analysing said phase-frequency spectrum to obtain a characteristic phase-frequency signature of said subject.

Said pulsed signal may be a broad band electromagnetic signal (such as radar frequencies, radiowaves, microwaves).

Said phase-frequency spectrum is based upon the variation of phase of the return signal in the frequency domain. According to the invention, the calculation step provides both an energy-frequency spectrum, and a phase-frequency spectrum and said analysing step comprises analysing said energy-frequency spectrum and phase-frequency spectrum to obtain a characteristic energy-phase-frequency signature for one or more layers of said subsurface.

In one embodiment, said step of analysing said phase-frequency spectrum comprises performing a statistical analysis of said phase-frequency spectrum.

Said statistical analysis may include at least one of principal components analysis, maximum likelihood classification and multivariate classification. Said step of analysing said phase-frequency spectrum may comprise frequency classification using energy bins and/or frequency bins.

Said method may comprise performing a rank matching operation wherein each phase-frequency signature is compared against every other phase-frequency signature, and covariance and correlation matrices are computed.

Said phase-frequency signatures may be output as spectral lines and compared to a database of spectral lines in said comparison step.

Said method may further comprise building said database by performing said method on subsurfaces and/or material of known composition.

Said method may be performed on similar solutions of differing concentrations in order to distinguish between and/or determine the concentrations of said solutions. Said method may be performed on one of a gas mixture, liquid mixture, solid mixture, powder mixture or multiphase mixture in order to distinguish between and/or determine the amounts of the constituents comprised in said mixtures.

## BRIEF DESCRIPTION OF THE DRAWINGS

Embodiments of the invention will now be described, by way of example only, by reference to the accompanying drawings, in which:

Figure 1 is a high-level flow diagram of a method according to an embodiment of the present invention;

Figure 2 is a flow diagram of the data processing elements forming part of a method according to an embodiment of the present invention;

Figure 3 is an illustration of a survey site during three phases of a survey scan;

Figure 4 is a time domain representation of a transmitted EM pulse transmitted in embodiments of the invention;

Figure 5 is an illustration of the axial ray paths between transmitter and receiver;

Figure 6 shows an illustration of the matching step of the HILDA workflow according to an embodiment of the invention;

Figure 7 is a polar plot of cumulative energy, phase and amplitude against frequency;

Figure 8 is a flow diagram of a typecasting process forming part of a method according to an embodiment of the present invention; and

Figure 9 is Spectral Line output representation obtained using a method according to an embodiment of the present invention.

**DETAILED DESCRIPTION OF THE EMBODIMENTS**

**Glossary of Terms Used In the Description**

*E-ADR*

Energy-ADR - the resonant energy measurement of a subsurface layer of measured thickness

*FFT Analysis*

Fast Fourier Transform Analysis is a technique for spectral analysis of signals. The analysis of the returned ADR signals from the subsurface to the ADR receiving system is performed by FFT analysis of the received spectrum (which includes radio waves and microwaves). This results in mathematical and statistical analysis of the received spectrum and the recognition of energy, frequency and phase relationships. More detailed spectrometric analysis is achieved through the quantum electrodynamic (QED) approach (Feynman, 1985) by quantising the entire ADR receive spectrum. In ADR quantum theory, this is similar to the equal temperament system of tuning musical instruments - in which each pair of adjacent musical notes has an identical frequency ratio. In this "tuning" methodology, an interval (usually an octave) is divided into a series of equal steps, with equal frequency ratios between successive notes. For example, a violin is tuned in perfect fifths. The notes are G - D - A - E; where the fundamental G is 192 Hertz, D is 288 Hertz, A is 432 Hertz and E is 648 Hertz. Note that a perfect fifth is in a 3:2 relationship with its base tone. The octave frequency interval is covered in seven steps (A, B, C, D, E, F and G) and each tone is the ratio of the $7^{th}$ root of 3/2, or in mathematical form $[(3/2) \wedge (1/7)]$. For ADR, the quantised frequency spectrum includes 3 octaves of the radiowave spectrum and 33 octaves of the microwave spectrum. When ADR is applied to geological analysis, rocks can be genetically classified by notes and octaves using the above spectrometric approach.

*Harmonic Analysis*

Harmonic analysis is the branch of mathematics that studies the representation of functions or signals as the superposition of basic waves. It investigates and generalizes the notions of Fourier series and Fourier transforms. The basic waves are called "harmonics" (in physics), hence the name "harmonic analysis," but the name "harmonic" in this context is generalized beyond its original meaning of integer frequency multiples.
**Harmonic Analysis** is a widely accepted technique for assessing materials in a laboratory setting in the chemical industry. However, to date, it has not been commercially applied to classify subsurface geology or mineralogy using remote sensing geophysical technology from the ground surface. Unique harmonic energy frequency and phase peaks are produced and can be analysed in a number of ways producing a range of parametric statistical tests. Different rock types with different mineral assemblages will exhibit different spectral harmonic relationships over these levels.

*Harmonic Phase*

The phase information is stored such that a pixel with a phase angle of zero will have an intensity of zero. The intensity increases linearly with phase angle, until almost 360 degrees.

*HILDA - Hyperspectral Invisible Light Dynamic Analysis*

A differential method of correlating spectral energy datasets to allow the spectral discrimination of materials.

*P- Scan*

Profile Scan of the subsurface with fixed focus Antenna spacings at ground level. Both Transmitting and Receiving Antennas are moved simultaneously in parallel along the length of the scan line. This produces an image of the subsurface (from ground level) based on the two-way travel time of Adrok ADR Scanner's beams from Transmitter to Receiver Antenna. The WARR data converts the P-Scan time-stamps into depths in metres.

*RADAMATIC*

Suite of Processing Software (Adrok Proprietary)

*Rank Matching*

A statistical matching method developed by Adrok for comparing one image to a database of many images. Utilises eigen distance measurement to "rank" closest matches

*Sub-Images*

2-dimensional cross-sectional images of the subsurface are produced from the P-Scans. Sub-images are specific blocks of these images.

*Survey Points*

The ground location of the Adrok Virtual Borehole scan (akin to the collar position of a physically drilled borehole)

*Typecasting*

Term used by Adrok to describe the process of identifying and classifying materials (e.g. rocks, soil and sediments).

*V-bore*

Short for "Virtual Borehole" produced by the Adrok Scanner

*WARR*

Wide Angle Reflection and Refraction scan to triangulate subsurface depths from the surface ground level. The Transmitting Antenna is moved at ground level along the scan line, away from the stationary Receiving Antenna which is fixed to the start of the scan line. Collected by ADR Scanner at ground level (that produces depth calculations).

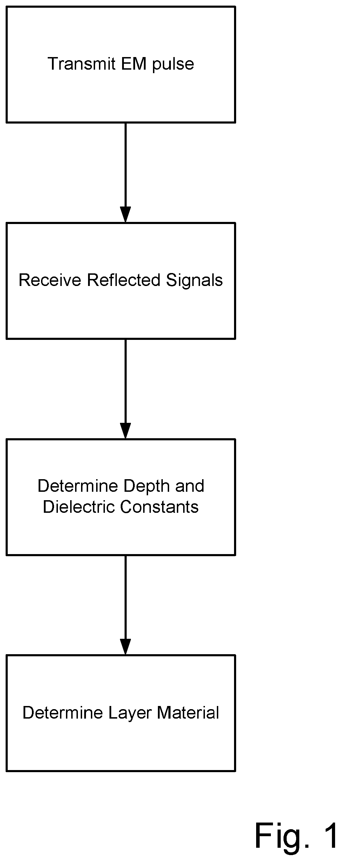

The goal of most geophysical field surveys is to deduce the sub-surface geology. The electromagnetic (EM) survey, described herein, searches for signatures which potentially indicate valuable mineral deposits, rock types and fluid content, based on dielectrics, EM energy, frequency and phase relationships. The method may be expressed in general terms using the flow diagram shown in Figure 1.

Figure 1 shows that, initially one or more scanning steps are performed, where an EM pulse is transmitted from a transmitter into the ground. The EM pulse is reflected from the boundaries between different subsurface layers and the reflected signals are received at a receiver. Transmitter and receiver may be of a type as described in WO 01/18533. The reflected signals are processed to determine the depth and dielectric constant of each layer within the subsurface. Processing may involve conducting WARR and/or CMP analyses to produce depth information for the time registered image. This is integrated with profile scan data to provide a depth correlated image of the subsurface. Triangulation of each subsurface interface is enabled by ray tracing and NMO computations. The received signals, depth data and/or dielectric constant data are compared with known data (from physically drilled or cored boreholes) and also EM data collected from core samples in the laboratory to determine the type of material of each subsurface layer and its depth below ground. The determined material and depth information may be used to produce a virtual borehole log.

Other methods employ "chamber" modes in which a sample of material under investigation is enclosed in a chamber, the transmitter antenna being arranged to irradiate the interior of the chamber and the receiver antenna being arranged to receive signals modified by the interaction of the transmitted signals with the chamber and its contents. This method is particularly useful for typecasting particular substances.

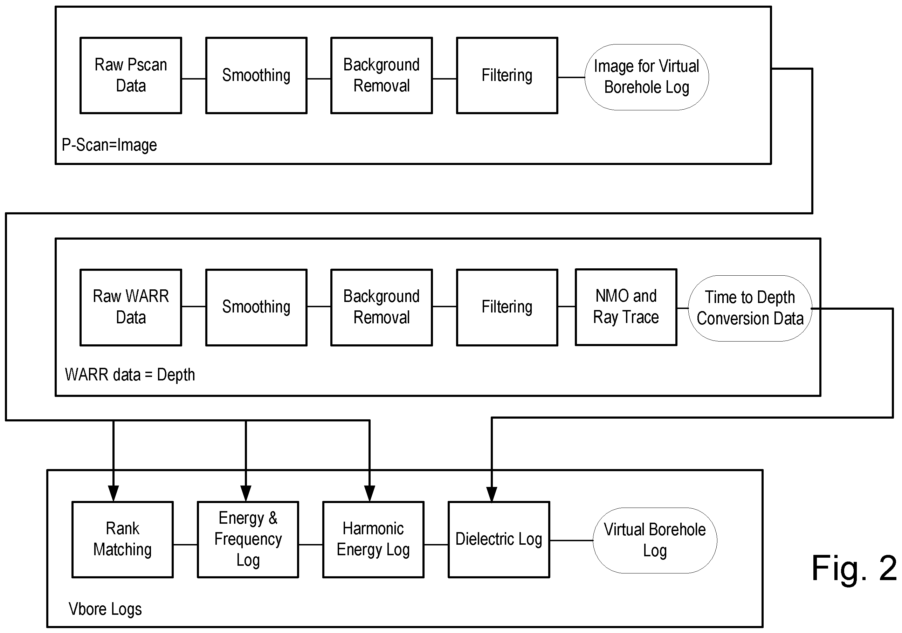

Figure 2 shows an overview of an embodiment of the main process described in detail below. It shows the process steps in obtaining a Virtual Borehole Log.

**Atomic Dielectric Resonance (ADR)**

The concepts described herein employ a technique known as Atomic Dielectric Resonance (ADR). ADR is an investigative technique which involves the measurement and interpretation of resonant energy responses of natural or synthetic materials to the interaction of pulsed electromagnetic radio-waves, microwaves, millimetric or sub-millimetric radio-waves from materials which permit the applied energy to pass through the material. The resonant energy response can be measured in terms of energy, frequency and phase relationships. The precision with which the process can be measured helps define the unique interactive atomic or molecular response behaviour of any specific material, according to the energy bandwidth used. ADR is measurable on a very wide range of hierarchical scales both in time and space. Time scales may range from seconds to femtoseconds, and spatial scales from metres to nanometres.

One of the best ways of thinking about rock layers underground is to consider an "Einstein-type conceptual model" of relatively regular rock layers like shelves in a bookcase. This can be readily visualised in the laboratory. Geologists should imagine themselves standing on the roof of the laboratory bookcase, above the top shelf, and scanning a line across the top-shelf roof, parallel to the shelves but looking vertically down at 90 degree inclination angle to the horizontal. The ADR beam of radio waves and microwaves is first lased in the telescope and then it is launched into the air medium from the aperture of the telescope, from which it speeds up and then it hits the first interface, which is the wood at the top of the bookcase. It is transmitted through the wooden top into the first empty shelf canopy which is air filled only (imagine no books on the top shelf) and then it hits the wooden base of the shelf and is reflected back to the top. Because the beam is continually being pulsed and it is lased it now resonates up and down in a series of peg-legs between the top and bottom of the first shelf.

It is then forced by transmission to move down into the second shelf and repeat this process by resonating in a series of peg-legs between the top and bottom of the second shelf. The geologist should now imagine that the first four or five shelves are not empty (air-filled) but are made up of rectangular blocks of rock- sandstone, siltstone, shale, coal, etc.( so that the beam slows down through different dielectric layers depending on the variable dielectric constants) . He will then see that the resonance (peg-leg reflections) between the top and bottom of each rock layer in each shelf are different and most important are measurable. The transmission times and delay times of the resonant reflections through each rock layer are variable depending on the rock physics parameters such as dielectric constants, absorbance, porosity, for example. In addition, there are special spectral associations related to the physical parameters such as energy, frequency and phase relationships and the statistical parameters associated with these spectral variables such as means, medians and modes together with minimum, maximum and standard deviations, for example.

This is the whole process of what can be described as "atomic dielectric resonance" (or ADR) of photon beams being transmitted through materials) and geologists can precisely map what happens to the confocal ADR laser beam as it is being transmitted through these layers. They can precisely track this beam as it progresses through the bookcase of rock layers, and as it passes through each layer software can tell the geologist the mean velocity through each layer, the mean dielectric constant, the delay times and three-dimensional dispersion of the beam with depth (in the radial Y-direction as it proceeds down in the Z-direction) so that they can map the three dimensional structure of the beam (which tells him its precise footprint through each rock layer). This is how the geologist can confirm that the laser beam of radio waves and microwaves is not only coherent but also confocal with an intensity pattern which slightly decreases with depth. The beam gradually narrows with depth as it goes deeper but the energy values with each layer are consistently high. This is why it is so useful for geologists involved in mineral prospecting because it can identify narrow veins with great precision.

Some aspects of the field and laboratory ADR equipment involve certain conditions being satisfied during the set up of the apparatus so as to obtain "standing wave oscillations" in ADR test sample chambers and / or in ADR remote sensing antenna system assemblies. In this respect, it is desirable to selectively control the group velocity of the radio wave and microwave radiation as it is emitted or "launched" by the transmitting antennas into the ground. In particular, for deep scanning the launch speed of the wave should be sufficiently slow to ensure that the wave can be accurately registered at a precise "zero time" location by the receiver antennas, after the pulse has been transmitted. The zero time position t(z) in remote sensing or t(0) in geophysics, is the start position for ADR range measurements and must be identified on the received ADR signal to determine the true time range (in two way travel time, (TWT- usually measured in nanoseconds)) represented by the received signal, returning from each resonant subsurface reflection layer.

The Wide Angle Reflection and Refraction (WARR) tracking method, which is one of the scanning methods comprised in ADR and will be described further, is able to (a) identify the upper and lower boundaries of each stratum, (b) determine the inter-layer beam velocity and mean dielectric constant of the material in each stratum and (c) identify the materials in the various strata from both the dielectric constants, known molecular or atomic spectral lines (after FFT Analysis of the received signals) and spectral ADR statistical parameters data-based for known rock types.

Three main measurements may be comprised in the proposed ADR method:

## (1) Dielectric permittivity measurement

Conventional radar can locate objects in a less dense medium (e.g. a plane in the sky or a shallow buried object in the ground) because those objects reflect back some of the signal. Radar can also detect the dielectric constants of materials penetrated. Ground penetrating radar can therefore detect boundaries with different dielectric constants (rather as seismic detects changes in acoustic impedance). ADR is not depth constrained whereas conventional ground penetrating radar is limited to very shallow depths.

ADR accurately measures the dielectric permittivity of materials encountered and determines the Dielectric Constant (DC) of each layer of rock to an accuracy of at least 1:400. With deeper penetration and a narrower ADR beam, the accuracy of dielectric mapping improves and at 1km depth an accuracy of 1:4000 can be achieved for the mean dielectrics of narrow layers at this depth. The dielectric constant is basically a measure of how much a given material will slow down the ADR transmission signal. Determining the dielectric constant of each layer enables each rock layer to be mapped with a depth computation from ground level and can also determine physical properties of the rock layer, such as moisture content, porosity and density indices.

Dielectrics also allows preliminary identification of the composition of each layer e.g. shale or sandstone.

In general, dielectric measurements for hydrocarbon layers in the earth tend to be between two and five for an ADR Scanner as disclosed herein, if water is absent. In geological terms, the main effect on the signals velocity as it propagates through the material is the water content. For example, air has a DC of one, whilst water has a DC of approximately 80. Most geological materials lie within these boundaries.

**(2) Accurate Depth measurements (by two independent methods)**

The ADR Scanner can measure depths to each subsurface horizon that provides reflectance and a change of beam velocity. Two independent methods are proposed on order to calculate depths to each horizon: (a) Normal Move Out (NMO), and (b) Ray Tracing. Only when both methods give the same depth measurement will that depth reading be accepted (this is called parallax). These depth measurements can be used to help tie-in or improve depth measurements made by seismic tools.

**(3) Spectrometric measurement**

The most important result of ADR's ability to penetrate all materials is that all the current imaging techniques of spectrometry become available to identify all materials encountered subsurface. Identification of these materials is based upon:

- absorption and reflection and emission of different wavelengths of electromagnetic radiation
- many different relationships of components in the returned signals e.g. energy / frequency/ phase relationships

After the subsurface has been divided into its geological horizons by determining its dielectric constant, spectrometry is used. The principle is as follows. The ADR system analyses many components of the return signal from a location where the geology is known and learns what return signals each material emits (i.e. the material is "typecast"). When ADR encounters an unknown material in the subsurface, it performs a comparison of the return signals obtained from that material with the contents of a database of known typecast materials until it finds a match. The material encountered is then identified. For example, oil bearing sands, water bearing sands and shales encountered in previous wells are typecast in an area. Then the ADR response from a target formation in an undrilled prospect is compared to those typecast formations until a match is achieved. This identifies the undrilled target formation. The database may be include signatures of many different rocks containing different combinations of oil, gas, water, etc. Ultimately ADR will be able immediately to classify any formation encountered by comparing it with this database. Other, already existing databases can also be used. These include NASA's JPL spectral library or the NIST Atomic Spectra Database.

**Output**

For the oil and mining industry ADR may be used to generate a virtual well log i.e. information equivalent to that derived from a drilled and logged well.

The output may take the form of:

1. Spectrometric material classification of subsurface layers - e.g. Virtual log providing material classification
2. Image of the subsurface - e.g. Profile scan
3. Logs:

   a. Dielectric Log - showing dielectric permittivity curves- a dielectric curve is produced by processing the WARR image. Hyperbolic curves are fitted to image features, the severity of the curve determining the dielectric constant of that layer. A specific example uses a WARR sampling interval of 2.5m and utilise two depth calculation algorithms to produce accurate depth information from the dielectric curve fits.
   b. Energy Log: the energy log is produced by sub-sampling the P-Scan image data in equal time intervals. A Fourier Transform is conducted on each sub-image, whereby the energy and frequency content is computed. A mean energy decibel value is calculated for each sub-image, which provides the energy reading at that depth.

c. Weighed Mean Frequency: the weighed mean frequency (WMF) log is produced by sub-sampling the P-Scan image data in equal time intervals. A Fourier Transform is conducted on each sub-image, whereby the energy and frequency content is computed. The frequency values are then modulated with the energy values to produce the WMF reading per depth interval.

Outputs of its Dielectric Log and the Virtual Logs can be provided, for example, in ASCII format, to allow a client to input these measurements into their own software models of the survey site(s).

**Scanning Techniques**

The following sections outline a number of scanning techniques that may be utilised. These comprise:

1. Profile Scans (or PScans) with a fixed base separation between Tx and Rx antenna(s). These show a 2-Dimensional (2D) cross-section of the material(s) under inspection with distance on the x-axis and time on the y-axis; and
2. Wide Angle Reflection and Refraction (or WARR Scans) which converts y-axis of PScan data into depth units (by measurement triangulations between Tx and Rx antenna(s)).
3. Common Midpoint (CMP)
4. Transillumination
5. Stare scan

In each case, the antennas can be used in a variety of ways. The following list is a selection of the ways in which they can be used:

▪ Monostatic - one sensor acts as a Transmitter (Tx) and a Receiver (Rx), however direct depth calculation can not be achieved by this method unless the permittivity of the materials of propagation are known prior to data analysis
▪ Bistatic - consists of two antennas, one Tx and one Rx. These can be moved together or independently which provides great flexibility in the type of measurement that can be performed.
▪ Array - consists of either:

a) One Tx and more than one Rx
b) One Rx and more than one Tx
c) More than one Tx and More than one Rx

Array sizes are normally limited by the physical space in which to scan, the electronic systems available to collect multiple data channels and the cost and complexity involved in developing such systems.

Note that "monostatic" and "bistatic" do not mean that the antenna systems are stationary as they can be moved and operated in any axis.

All the different scan types described below can be used to develop a database of known situations or materials (depending on how they require to be scanned). This database becomes a reference datum for other measurements and spectral matching techniques can be employed to match unknown situations/materials to the known situations. A description of the scan types employed by the Inventor follows after a general overview of the transmitter and receiver techniques employed.

Transmitting EM Pulse and Receiving Reflected Signals

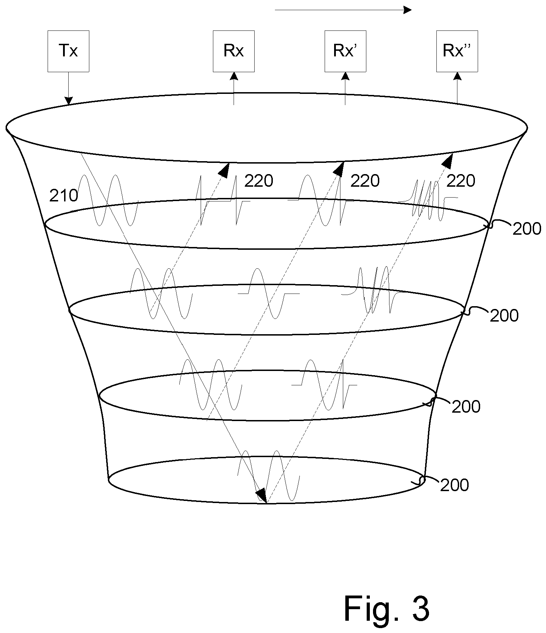

Figure 3 shows a survey site during three phases of a survey scan (here a WARR scan). Shown is a transmitter Tx and a Receiver Rx, Rx' Rx" in three different positions. Also shown is the subsurface comprising a number of reflective horizons 200, defining subsurface layers therebetween. At each of these horizons, the transmitted signal 210 is reflected. Features of the signal are altered by subsurface features resulting in a return signal 220 with unique signature depending on the path taken by the signal between transmitter and receiver and the subsurface composition/geology through this path. In particular, each of the layers of the subsurface has a dielectric constant. The dielectric constant of a subsurface layer affects the rate of propagation of the transmitted signal through the material of that layer.

The transmitted signal travels through the layers of the subsurface. Some of the energy of the signal is reflected by each boundary between the layers. The remainder of the energy in the Signal continues through the further layers. The reflected signals are received at the receive antenna some time after signal transmission. The time of receipt of the reflected signal is dependent on the dielectric constant of the material(s) of the subsurface layer(s) travelled through and the thickness of the subsurface layer(s). In addition, the transmitted pulse may be refracted at the boundary between the layers according to Snell's Law.

The signal 210 is initially sent to the transmitting antenna where it is conditioned before being launched remotely, e.g. vertically or at a declined look-angle into the ground. The transmitting antenna contains dielectric lenses that helps focus the signal inside the antenna. This helps condition the velocity with which the signal exits the end aperture of the antenna before it is sent into the ground.

The optimum lasing performance of the antennas was achieved by selection of appropriate dielectric lens configurations to optimise the standing wave effects within the transmission chambers and minimise aperture attenuation. The best lasing performance for imaging can be achieved by plotting of the Transmission Coefficient (S21, dB) against frequency, which shows a progressive standing wave transmission through the chamber with sequential pulsing nodes at key frequency levels but a balanced pure input reflection coefficient (S11, dB) when plotted against frequency.

The production of the pulse triggers a signal to be sent to the receive circuitry to listen for reflected signals from subsurface features. The reflected signals 220 are collected by the receive antenna Rx, amplified in a pre amplifier and then have a time varying gain applied. The time varying gain increases the level of gain as the time from EM pulse transmission passes. This compensates for the increased attenuation of the reflected signal with depth travelled. The reflected signals are then passed through an analogue to digitial converter (ADC) and stored within the receive antenna apparatus. The storage of reflected signals at the receive antenna apparatus allows the data to be transferred to a data logger and/or data processor at a later time. Additionally or alternatively the reflected signals may be transmitted across a data link to a data logger and/or data processor. Data can be backed-up and removed on a removable storage device (such as a flash drive).

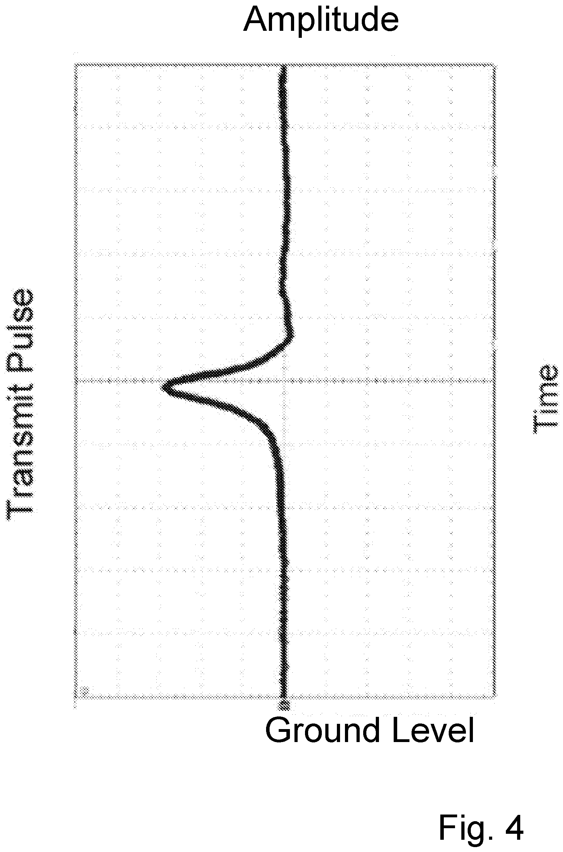

A time domain representation of the transmitted EM pulse is shown in Figure 4. The y-axis of this image shows Energy (or amplitude, represented by 0 to 100%) and the x-axis represents time (typically in nanoseconds, ns). The amplitude of the pulse displayed can be seen to be 1.5volts from the major tick marks at 0.5volt intervals. Note the 500mv scale is stated bottom left.

The transmitted waves have two components: (i) a long wavefront standing wave to obtain deep penetration; and (ii) shorter resonance waves within the standing wave to enhance vertical resolution.

Profile scanning (P-scan)

Profile scanning (P-scan) is a type of scan used to produce an image of the subsurface. It can also be used in spectral analysis, whereby different sub-images are used to match against the database. Sub-images are generally in two forms:

- Fixed time (vertical) across the whole area to be analysed
- Fixed time (vertical) across part of the area to be analysed

A P-Scan is conducted by holding transmit and receive antennas at a fixed separation, and moving these antennas along a measured lateral distance along a ground surface, called a survey line. Electromagnetic (EM) pulses are transmitted vertically (or at an angle off-vertical) into the subsurface as the transmit and receive antennas are moved along the survey line. Each transmitted EM pulse is reflected from features within the subsurface to produce, at the receive antenna, a continuous signal trace.

The amplitude of the signal received from a reflector varies with the propagation coefficient of the material through which the pulse is transmitted, which is related to the dielectric constant of this material. Because a resonant (ringing) pulse has been generated, the pulse also being optimised by lasing, it is possible to observe the reflected ringing pulse. Of particular interest is the modulation of the rings, which can be used as a diagnostic tool to identify material types. Modulation effects can be studied by energy, frequency and phase relationships caused by the modulated ringing reflections. It is then possible to mathematically evaluate the returns by typecasting different materials in the laboratory under controlled boundary conditions such as (a) totally dry rocks (e.g. cooked in a microwave to remove all moisture) and (b) totally saturated in water (over 10 days for example) to study responses of totally saturated rock materials.

A number of P-Scans are conducted along a survey line. The scan traces may be placed adjacent one another to produce a P-Scan image wherein the amplitude of each scan trace is represented by contrast to show the subsurface layers. The P-Scan image has two axes: an x-axis comprising the number of P-Scan traces that are placed adjacent to each other to obtain the image, which is proportional to distance along the survey line; and a y-axis that comprises the time after EM pulse transmission of receipt of the reflected signal.

The P-Scan is a time domain measurement, with time in the y-axis. The depths obtained from a WARR Scan or CMP scan (see below) can be applied to the P-Scan to give the P-Scan a depth dimension in the y-axis.

WARR Scanning

The WARR analysis method generates information about the sub-surface reflectors that the ADR signals propagates through and is reflected from. WARR analysis is time based and utilises two calculation methods that individually calculate a travel time to the sub-surface reflectors. The calculation methods are called NMO (Normal Move-out) and Ray Tracing. Both methods are widely used in seismic data processing. From this travel time, two important factors can be derived, firstly dielectric constant of the material through which the signal has been propagated. Secondly, the thickness of the layers that the signal has propagated through can be summed to provide an overall depth of penetration from the sensor datum (for example, the ground surface).

WARR scans are conducted over a set horizontal distance, whereby the first half of the horizontal line contains data, averaged over the horizontal distance, regarding the depth information to reflectors.

A WARR Scan is conducted by holding one of the transmit antenna or the receive antenna stationary and moving the other of the transmit antenna or the receive antenna across the ground over a survey line of the survey site. In the example shown in Figure 3, the transmit antenna remains stationary and the receive antenna is moved away. The separation of the transmitter antenna and the receive antenna increases in equal separation distances, s. Alternatively, the location of the transmit and receive antennas may be derivable using a positioning system such as the GPS and the separation calculated accordingly. EM pulses are transmitted vertically (or at an angle pointing downward to the ground) into the subsurface and the reflected to the receive antenna at each separation. The transmitted and reflected signals are shown in Figure 3.

In one embodiment, it is proposed to collect data at a survey site for post processing by conducting a P-Scan over a series of survey lines at the site, and conducting a WARR Scan over the same survey lines. The P-Scan provides an image of the subsurface and the WARR Scan provides depth and dielectric constant data for each of the subsurface layers.

Common Mid Point scan

Like a WARR scan, a Common Mid Point (CMP) scan can be used to determine the depth to a reflector or sub-surface horizon. This method is employed by moving both the Tx and Rx antennas away from one another in equal distance steps, or at equal velocities, from a common point. By doing this the same reflection point will be maintained. The depth to the reflector is then derived from the following equation, assuming two measurements have been recorded away from the common point:

$$d_n = \sqrt{\frac{x_{n-1}^2 t_n^2 - x_n^2 t_{n-1}^2}{t_{n-1}^2 - t_n^2}}$$

where, x = antenna distance from common point (measured in metres)
t = two way travel time (measured in nanoseconds)

This method is repeated until the depth to all reflectors seen in the ADR images have been recorded, the velocities of which can be derived from the aforementioned equations.

The derivation of the above equation is as follows:
In a homogeneous material, the relative velocity, $V_r$ is equal to:

$$V_r = \frac{c}{\sqrt{\varepsilon}} \ \text{ms}^{-1}$$

Therefore the depth, d can be derived as:

$$d = V_r \frac{t}{2} \ \text{ms}^{-1}$$

where, $\varepsilon_r$ = dielectric constant (i.e. relative permittivity)
t = measured travel time to the reflector (the 2 in the equation related to the two way travel time, meaning the signal travels to the target and back again)

Trans-illumination scan

For a Trans-illumination scan the Tx and Rx antennas are directed toward one-another. They can be held stationary, moved in tandem, or moved independently (i.e. like a WARR scan) to produce image and depth information. The processing required for each will depend on the scan type and the geometries involved.

Stare scan

The Tx and Rx antennas are held at a fixed separation and do not move, i.e. stare like a camera taking a long exposure. Data is collected over a period of time to build up an image of that area under observation.
Antennas can then be moved to another point whereby the same measurement can be repeated.
Images generated this way can be added together to make a synthetic P-scan or WARR image. Stares are very useful for spectral typecasting of target signatures.

Look-Angle of Antennas

It is important for determining the best look angle and Ray Path spacings for focusing the Transmit and Receive antennas at the start of a WARR and for fixed spacing P-scans.

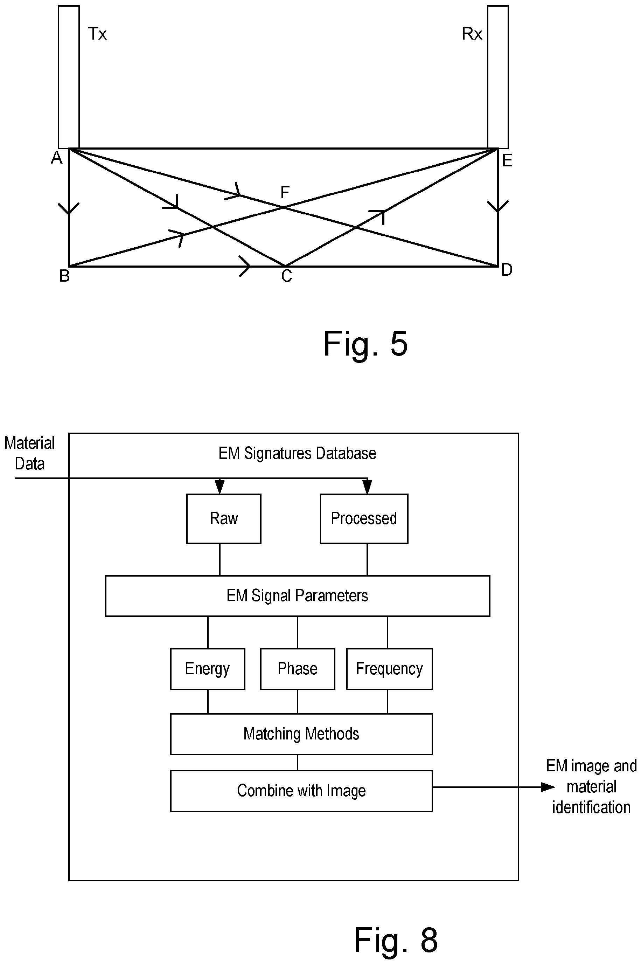

Figure 5 shows an example with a one metre spacing between Tx and Rx and a 40cm height above the ground surface. Note that only the axial ray paths have been drawn. Of note are the time delays for each of the important ray paths.
These are summarised:

    (1) AE - the direct shortest air path =3.281ns (=BD)
    (2) ACE - the symmetrical mid ground reflection path = 4.202ns
    (3) ABE (Nadir Tx) and ADE (Nadir Rx) = 4.846ns
    (4) ABDE - The long way round (Bookcase effect) = 5.906ns

These are the principal axial ray paths for four ray bundles and this information plus the averages can be used to precisely identify the ground surface on any image for this field condition.
There are two separate modes of operation: (1) as an outdoor field survey system for surveying the earth's subsurface on land or at sea; and (2) as a laboratory system for scanning rock samples and core samples. The table below illustrates these two modes:

| Method | Principle | Physical Property Measured | Interpreted Parameters |
|---|---|---|---|
| **Onshore / Offshore geophysical survey** | Scan the subsurface from the ground surface. Detects electromagnetic propagation, reflections and resonance in subsurface materials. Data acquired in time-domain and then converted into energy- and-frequency spectra. | Dielectric permittivity . Amplitude-time offsets. Velocities of wave returns. | Stratigraphic logs. Dielectric values. High resolution vertical depths and inter-layer rock horizons. Structural analysis (thin-bed analysis) |
| **Core Sample Petrophysics** | Dielectric properties of rock are indicators of wettability, porosity, mineralogy, pore structure and pore geometry. | Moisture content. Dielectric permittivity . Dielectric spectrography. | Pore-fluid analysis, presence of carbonates, shaly sands. Rock type classification based on spectra. |

**Depth Scan Data Processing**

In practice the method of determining depth and dielectric constant from the raw WARR data involves user input to processing software. The user input is characterised by fitting hyperbola to a WARR Scan image. A WARR Scan image may comprise adjacent scan trace data collected during a WARR Scan. A typical WARR Scan image shows time on the y-axis and separation distance between the transmit and receive antennas on the x-axis. The subsurface layers are shown at an angle as the reflected signal takes longer to reach the receiver at greater separations of transmit and receive antennas. Although the WARR Scan image may appear to show a linear increase in reflection time with distance, the actual increase is hyperbolic.

The user of the software therefore firstly inputs a first layer boundary (horizon) on the WARR Scan image to represent the end of the air wave. This is done by placing on the image a series of markers that combine to define a hyperbolic polynomial. The air wave is the transmission of the EM pulse from the transmit antenna into the ground, which is received directly by the receive antenna through the air. The input of the first horizon is done visually by the user. The first horizon is used as a reference for further horizons as it represent to and, as the medium is air the dielectric constant is 1.

Subsequent horizons are fitted to the WARR Scan image in the same way (i.e. visually by the user). The horizons are then "tested" to see whether they are consistent with both NMO and ray trace methods of determining depth (see below). If there is a match then the manually input horizon can be fixed and the average dielectric constant determined between the last horizon and the current horizon determined.

Normal Move-out (NMO) and Ray Tracing

The WARR analysis method can be used to generate information about the sub-surface reflectors that the ADR signals propagated through and were reflected from. Alternatively, the Common Mid-Point (CMP) method may be used to generate depth information for the ADR scans. WARR analysis is time based and utilises two calculation methods that individually calculate a travel time to the sub-surface reflectors. From this travel time, two important factors can be derived, firstly dielectric constant of the material through which the signal has been propagated. Secondly, the thickness of the layers that the signal has propagated through can be summed to provide an overall depth of penetration from the sensor datum (for example, the ground surface).

In order to track discrete layers within the material(s) under inspection, a pixel filter may be applied in X and Y on the WARR scan image (e.g., usually a 3 by 3 filter in X and Y) to smooth out random signal undulations. Layers are then picked for WARR tracking, which enables the fitting of a hyperbolic polynomial to compute depth in the Y direction by two methods: (i) normal move-out (NMO); and (ii) ray-tracing (RT). This WARR program selects a unique depth solution once the NMO depth equals the RT depth.

It is assumed that under the ground there are a series of horizons which reflect the ADR signal. It is also assumed that the signal obeys Snell's refraction law:

$$\frac{\sin i}{\sin r} = \frac{v_i}{v_r}$$

where i and r are the angles of incidence & refraction, and $v_i$ & $v_r$ are the incident & refracted signal speeds.

The reflection times for each horizon for a range of antenna separations are recorded. Using Snell's law, the horizon depths can then be computed by the ray tracing method. The NMO method is an approximation to ray tracing for small angles of incidence and gives the same result for the topmost horizon. It is simpler to implement and is more stable for larger angles.

If $D_i$ and $T_i$ are the distance and times between adjacent horizons then for NMO the time for a given antenna separation X for the reflected signal from the i$^{th}$ horizon is:

$$4\sum (T_i)^2 + X^2 \frac{\sum T_i}{\sum \dfrac{D_i^{\,2}}{T_i}}$$

where $D_i/T_i$ is the signal speed $V_i$ in layer i. $T_i$ is the time for a vertical signal to pass through a layer. $DC_i = (C/V_i)^2$ is the dielectric constant in layer i, where C is the speed of light.

By adjusting the horizon depth and signal speed interactively horizon by horizon to match the displayed horizons, the horizon depths and dielectric constants can be determined.

The time offset for the image can be determined by fitting the direct wave T = X/C.

Putting this theory into practise involves Data Processing operator(s) firstly setting the time zero of the recorded pulse. This finds the air wave that is travelling between the Tx and Rx antennas and is then used as a measurement datum for the remainder of the WARR fittings.

Subsurface layers are tracked on an ADR image by fitting hyperbola to the layers of the image. The operator gains confidence in the fact a layer is present at a particular position when the results of the NMO and Ray tracing methods are similar (this is when the crosses on the screen do not move vertically (parallax) when each method of calculation is selected. If there is parallax of the crosses then it is apparent that there is 'no' mathematical solution to that curve and another must be found. This parallax is removed through the software operator changing the input depth and/or dielectric constant parameters, the dielectric constant changing the severity of the hyperbolic curve. Once the eccentricities in the shape between the NMO and Ray tracing curve has been removed (which is minimised by careful adjustment of the coarse and fine positional buttons and coarse and fine dielectric buttons) then the layer is deemed to be a good fit.

**Image Data Processing**

For each depth layer within the material under inspection, a sub-image is selected over a common sized dimension and compared with other sub-image layers. The comparison is made by FFT analysis.

The sub-images are prepared for material composition analysis and comparison to a pre-determined materials database (typecasting). Two types of sub-image analysis are conducted: (i) Energy (E) analysis (Minimum, Maximum, Mean, Maximum/Minimum,Range/(Maximum + Minimum), Range/(Maximum/Minimum), Standard Deviation, Reflection Coefficient, Range, ADR); and (ii) Frequency (f) analysis (Minimum, Maximum, Mean, Maximum/Minimum, Range/(Maximum + Minimum), Range/(Maximum/Minimum), Standard Deviation, Reflection Coefficient, Range, ADR). This Step also generates Rank Matching Tables of statistics as an output file which the software end-user can conduct statistical analysis upon. Furthermore, data may be produced as graphical output files in the form of graphs, histograms, bar charts, circular diagrams, etc.

Rank Matching

Rank Matching has been developed for grading image spectral attributes according to Energy / Frequency Relationships. The mathematical method of operation is to compare each spectral material in the database against every other spectral material and compute both the covariance and correlation matrices. Discrete spectral clusters can then be linearised in n-dimensional space and the linear distance between clusters measured by some D-statistic such as the Mahalanoblis D-square statistic, or Euclid Mean Distances. From such distance measures a correlation coefficient is computed based on highest spectral correlation and this parameter is used to grade the order of the material spectra by ranking from the highest correlation to the lowest correlation.

In another step a scan trace image may be converted to a wiggle trace image. For example, the left wiggles display increasing amplitude values, whereas the wiggles to the right show decreasing amplitude values. Using the real time pan zoom facility in "display" image mode, the actual time (e.g., nanoseconds (ns)) and amplitude (e.g., 0 to 255) per pixel are highlighted on the screen. This enables strongly reflecting horizons to be selected for tracking in WARR mode.

The two-step training process employed helps to set covariance and correlation limits in n-dimensional space which helps to refine internal predictive models and expert systems developed from limited material datasets. The analyst should train on a known material (where the user knows the material properties input to the database) and/or borehole data (where the user knows the data properties from the borehole/drilling logs). The output of this process is a table of interlayer dielectrics, material thicknesses, and depths computed by NMO and RT methods. This table also indicates that several tracked layers may occur within one material and/or rock type, usually due to slightly varying dielectric constant values or moisture contents.

Next, the material(s) under inspection are analysed for classification. This process requires the software programme reading two files: (i) the depth corrected file from WARR output; and (ii) the time domain P-Scan image or WARR image. If a borehole record is available as a text file, the horizons may be read into the software as a third file input. A whole range of mathematical functions can be selected and used by the end-user. For example, the Minimum, Maximum, Mean, Maximum/Minimum, Range/(Maximum + Minimum), Reflection Coefficient, Range, ADR, Range/(Maximum/Minimum), and Standard Deviation functions can be applied to the frequency spectrum, the harmonic conjugate of the frequency spectrum or both.

Frequency analysis is normally applied when a large number of frequencies are required for output analysis. If this is not the case, and a smaller number of frequencies are required the autocorrelation function may be applied to the data set, instead. For subsurface geological applications, "analysis by depth" is usually selected in preference to "analysis by time range" so that results can be directly compared to borehole depth records (where available).

Hyperspectral Invisible Light Dynamic Analysis (HILDA)

A new FFT analysis procedure based on spreadsheet analysis of higher order energy derivatives has been devised, "Hyperspectral Invisible Light Dynamic Analysis". These higher order energy derivatives show changes of photon acceleration and higher orders of differentiating between rates of change of rates of changes of acceleration. The aim is to explain more coherently the exact dynamic behaviour or response of Atomic Dielectric Resonance behaviour of the invisible light beam interactions with different materials.

The first derivative of the energy spectrum from the FFT analysis measures the rate of change of energy and these rates of energy change can be explored/quantified with every frequency bin for the given microsecond, nanosecond or picoseconds time range investigated. This procedure is in contrast to energy bin analysis which provides ADR frequency ratios.

The second derivative of the energy spectrum measures the accelerated change of energy and again these rates of change can be explored/quantified with every frequency bin.

A new f-bin analysis procedure is based upon observations that very interesting sequences of energy changes occur with frequency by producing a new range of higher order derivatives, starting from the $3^{rd}$ derivative and extending the procedure to higher orders, at present, up to the $16^{th}$ derivative.

The f-Bin analysis procedure is complex to visualise in multi-dimensional space it is recommended that it is viewed as a Matrix Analysis Test (MAT). The form of analysis recommended is a sophisticated screening procedure, performed on the ADR-Dynamic E-matrix of higher derivatives.

In one embodiment this analysis process comprises an analysis of positive and negative harmonic energy changes at 32 harmonics for 16 derivatives, for all geological samples (which can include; cores, chippings, fluids gas and minerals). Matching of subsequent field images is based on matching of the positive and negative energy change patterns. All tests use the positive and negative energy changes at each derivative as a 'fingerprint' of the core samples. Tables are generated, each containing the positive and negative energies for each Geological sample. Each derivative can be taken as a separate 'test' whereby field image HILDA results can be matched 16 times to determine how many times there is a match to a particular rock. Additional tests may be performed by producing one or more tables of the difference between the changes of energy for two different derivatives; for example a table of the differences between the changes of energy for the 16th and 15th derivatives may be produced.

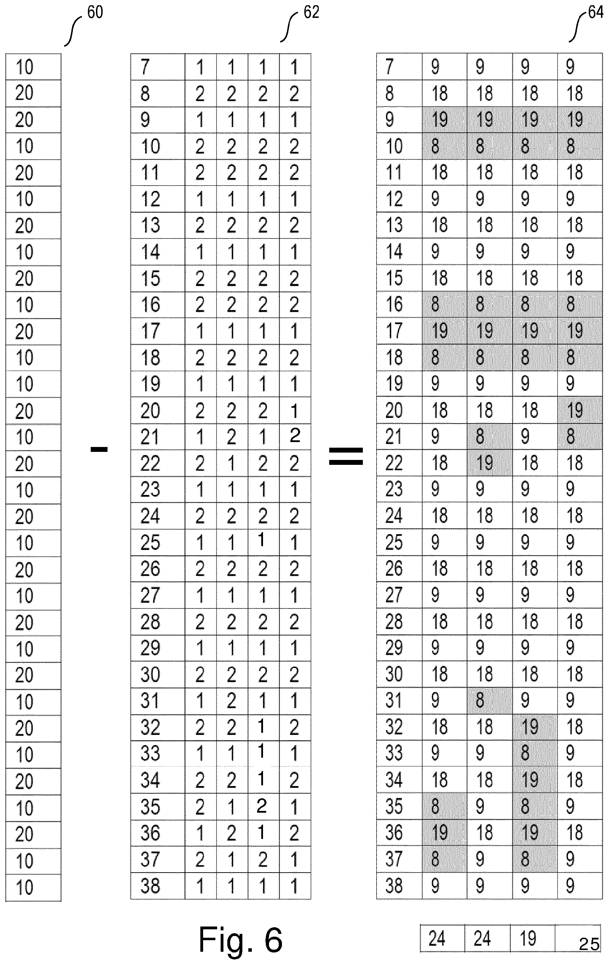

These tables of energy changes can then be compared to a library of similar tables of energy changes for the corresponding derivative and the rock which obtains the highest 'score' is considered to be representative of that particular rock type. A direct comparison of the tables is not made as the magnitude of the numbers at each derivative are significantly different when moving from a laboratory to an *in situ* environment. Consequently each table is reduced to the sign of each energy change. In a specific embodiment, each library of rock samples is converted such that each positive energy change value is assigned a "1" and each negative energy change value is assigned a "2". Similarly the field image tables under test are converted such that each positive energy change value is assigned a "10" and each negative energy change value is assigned a "20". Of course, the actual values assigned may differ from these specific examples. To match an unknown sample to a library sample, the unknown sample is subtracted from the library sample. In the specific example shown, results of 9 and 18 indicate disagreement (positive hit and negative hit respectively), while results of 8 and 19 indicate agreement negative hit and positive hit respectively) Figure 6 shows an example of this matching method. An unknown sample energy change signature 60 (shown here as harmonics 7 through to 38 for a single derivative) has subtracted therefrom each entry of a library 62 (shown here is a library of 4 samples) of different energy change signatures of known rock samples for the same derivative. The result of each subtraction is shown the next table 64. The sample with the most agreements (best correlation- shown at bottom of table 64) is considered the best match for this test. In this example it is the fourth column with total of 27 agreements). The results of all the tests, for the different derivatives and derivative differences, are aggregated to obtain the best overall match. Both the amount of tests that identify a rock as a potential match and, where the library samples are grouped according to rock type, the Rock Group that has the highest frequency collectively may be considered.

## Cluster Analysis

Outputs should be generated for all geological samples using energy statistics which may include: *E-ADR, E-Gamma, E-Mean, E-Max, E-Min, E-Range, E-R/(Mx+Mn), E-R/(Mx/Mn)* and *E-SD.*

In a language such as Matlab, these outputs are summed across their frequencies to provide a single value answer for each variable. To perform cluster analysis in 3D space, the various triplet combinations of statistics can be plotted (there are a total of 504 possible combinations). When a suitable combination of statistics is selected (if possible), which is able to discriminate between different geological specimens, the ratio between the 3 is taken, i.e. X:Y and Y:Z. This is to account for the change in the magnitude of values when moving from the labratory to the field: while the numbers might change, the ratio between the variables should not.

All variables should be checked. However, if there a time constraints the recommended variables to begin with are: E-ADR, E-Range and E-Max.

## Peak and Trough Analysis

Peak and Trough harmonic data for all geological samples should also be generated using energy statistics which may include: *E-ADR, E-Gamma, E-Mean, E-Max, E-Min, E-Range, E-R/(Mx+Mn), E-R/(Mx/Mn)* and *E-SD.* In particular, peak and trough analysis using only E-ADR statistics is by itself very beneficial.

A MATLAB script has been generated that systematically matches the peaks and troughs for each energy variable of the known specimens to field data, providing a score for the best possible match, i.e. the most variables that correspond to the library specimen. However, this method may not be the best for all new libraries.

It may also be the case that the peaks and trough data are good for identifying one geological sample but not another. In this instance, a combination of peak and trough data can be used with other classifying techniques such as HILDA or cluster analysis.

Spectral Line Analysis

Spectral Line Analysis_is often utilised for field images, where extracted lines are matched to a harmonic library that has been generated using data collected by external sources such as the JPL Aster database.

However, for the purposes of identifying spectral lines unique to newly acquired geological specimens, in the newly developing library, spectral line extraction can also been done on all new library rock samples. These can be used as unique identifiers for classifying the subsurface and to create a spectral line library, removing the need to use external sources and allowing a like for like comparison.

Spectral line analysis in one embodiment may comprise, for each sub-surface layer or sub-image, detecting the total number of spectral lines, and noting which of these spectral lines is attributable to a particular element or mineral. The percentage of the total spectral lines that are attributed to a particular element/mineral is taken to be indicative of the percentage content of that element/mineral in that layer/sub-image.

Phase Analysis

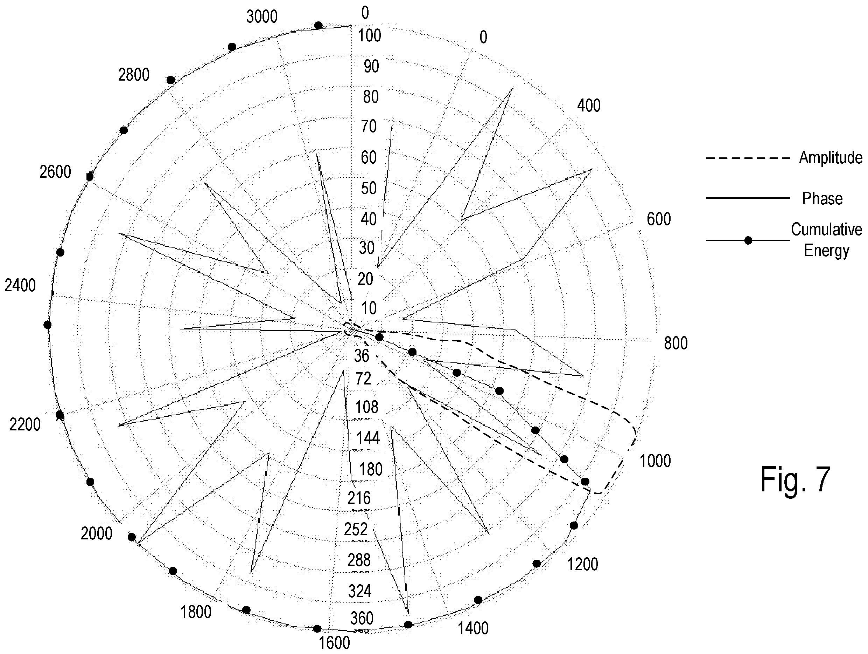

An excellent signature for comparison and analysis is the variation of phase in the frequency domain of the returned signal. This may be represented by way of a circular, or polar plot. For evaluation of Harmonic changes over different frequency bandwidths, the Circular Plots have proven to be the simplest way to evaluate phase changes. This is particularly the case when analysing concentrations of molecular solutions. It can be shown that different concentrations of the same solutions have quite unique phase plots. The plots may also show the changes in signal amplitude or radiance values, and /or cumulative energy. An example of such a plot is shown in Figure 7.

**Typecasting**

The next stage of the process is typecasting. This comprises making a statistical comparison of the processed scan trace images (spectral lines) to a database of (for example) spectral lines in order to determine composition of the material being considered. The database may already exist, or else a new database may be built.

Three main software modules are used to operate an EM typecasting experiment, firstly the data collection software is required to collect and display the digitised waveform returns captured by the hardware system. Secondly, image processing software is required to conduct specific tasks on the data that may assist in highlighting the material in question. For example, if it is known that material X has a specific amplitude response between 300MHz and 450MHz then the image can be band-passed to capture data only within this spectrum, thus making it easier to identify the data in this spectral range. Finally, the EM data processing and databasing software stores material information and relate unknown samples to this information.

Deciding upon the correct data analysis method is a factor within the typecasting experiment. For example, it may be possible to use the "raw" data to match to the database, however, it might be necessary (depending on scanning conditions) to conduct some form of image processing such as smoothing or background removal of the data. Initial experimentation studies are useful in determining the level of processing required so that future material examination can be conducted in a similar manner.

Image processing *(inter alia):*

- Filtering
- Smoothing
- Background Removal
- Subtraction (e.g. image with sample minus image with no sample)

All the relevant EM signal parameters may be studied to provide enough information to make an informed decision regarding the material based on its energy frequency relationships.

Methods of conducting EM signal parameter relationships may include:

- Conduct amplitude analysis
- Conduct image-time analysis
- Conduct data matching & correlations
- Study energy frequency relationships

  ◦ Total Frequency
  ◦ ADR Value (Standard Deviation)
  ◦ ADR Ratio (Mean / Standard Deviation)
  ◦ Energy Amplitude
  ◦ Energy Log Amplitude
  ◦ $1^{st}$ derivative of energy
  ◦ $2^{nd}$ derivative of energy
  ◦ *n'th* derivative of energy
  ◦ Energy of dominant frequency

- Build (or match unknown samples) results to a database of data developed from the energy frequency relationships listed above
- Report on results from database matching

The next step in conducting a typecasting experiment, after the data has been collected and processed (or not processed) is to use the data for typecasting. At this stage (immediately prior to data processing) there are two possible situations; the collected data can either be:

1. used to start building a database
2. used to match to a current database (as has been described in the previous section and is expanded on below)

Building a Database

Building a database consists of storing information pertaining to material or material types. EM models of these materials/material types are constructed through energy, frequency and phase relationships. By building up this relationship information and storing it for future use it can be used to discriminate between materials located in other environments as opposed to that where the typecasting database was collected. An overview of this process can be seen in Figure 8 below.

If building a database from scratch, one of the most important factors to consider is the time range over which to collect the database data. This has a major effect on the way this data can be used later when comparing to other databases or images. For example, it is easier and more accurate to match a database of 25ns to a 25ns image. Further if matching a sub-image to a database, this will only work if the sub image and database time ranges match.

Another method that can be used for comparing images to the database is if the database time range is an exact multiple of the image time range, for example if the image is 500ns long, a database time range of 25ns would be a suitable time range for matching to that image.

The image data is combined with the matching data to produce an output for the user in the form of a thematic map. It should be noted that the data can be accessed at any point throughout the process to allow the user to establish and control the development of the database.

Matching to a Database

Once the database has been developed it is very simple to match the data to the database. Whole images or sub-images can be matched. However if one requires to automatically match a sub-image to a database it is important the time and frequency parameters match in order to allow the software to provide a suitable match. Time range and sampling rate of the data is an important factor as the number of frequency steps (per image) have to be identical to allow the software to provide the match.

Outputs of Typecasting

A whole range of mathematical or statistical parameters are related to the behaviour or response of a wide range of material substances to EM signals. Statistical descriptions of materials using mathematical or statistical parameters with reference to the statistical significance levels of the relationship(s) investigated and the formulation of these statistical results into an expert system using logic decisions to enable the typecasting outputs to be used in the exploration, identification and blind testing of unknown materials.

Some of the tools available to ascertain the EM signal signature relationships are:

Image parameters for testing:
Band passing
Smoothing
Filtering (X, Y)
Amplitude analysis (e.g. Max-Min, foreground to background variations, amplitude) Principal Components Analysis (PCA)

EM Signal variables and parameters for testing:

Frequency and Phase variations over 360 degrees
Frequency and amplitude analysis
Phase Analysis
Vertical and Horizontal Phase Changes
Progressive Wave ratios (Vertical Phase Changes / Horizontal Phase Changes)
Frequency and phase analysis
Amplitude, Frequency and phase analysis
Energy analysis

Statistical Methods for EM analysis:

Interrelationships of ADR variables and parameters associated with the variables Correlation and regression techniques
Multi-variate (Multiple Correlation and Regression Analysis)
Analysis of variance (within group and between group)

The statistical process from typecasting to classification of unknown material involves hypothesis testing, and there are six basic steps each of which should be followed whatever statistical parameters or EM variables are being tested. The process can be summarised and formalised in six steps (originally formalised by Seigel, S. 1956. Nonparametric statistics for the behavioural sciences, 6-17. New York: Mcgraw-Hill).

Step #1: Stating the null hypothesis related to the material being tested:

The null hypothesis (usually symbolised by Ho) is a hypothesis of no differences being detected by the EM apparatus or statistical parameter being tested. The alternative hypothesis (in a yes/no situation) is symbolised as $H_1$. This symbol may describe the test observers hypothesis that the material is of a type $H_1$.

Step #2: Selection of the statistical test and EM parameter to be tested:

A large number of statistical tests are available for any particular situation (there is usually a measurement requirement and a statistical model associated with each test which together imply or make some ascertainment about the sampled population. In this case for example the sample population could be related to a range of frequencies contained in a sub-image of the sample material. Sometimes we can test whether or not the conditions of a particular model or a particular EM relationship are met, but more often we have to make some assumptions. These assumptions usually form what we would describe mathematically as "logical conditional relationships". These logical conditional relationships are then listed in sequential orders of importance and used in the formulation of an expert system to test the $H_0/H_1$ situation being investigated.

Step #3: Choose size of sample, $S_n$ and define probability $p_a$

At this stage the choice of sample size ($S_n$) is likely to be influenced by the choice of the statistical test (for example in a small sub-image stacking would not be appropriate during FFT analysis if the image pixel dimensions were small). A fair judge of yes or no for type of material being identified could be a probability of 0.05 (1 in 20, meaning there is only a probability that the outcome of this classification could have happened by chance). Selection of a probability of 0.01 is more convincing because this represents the fact that the outcome could only have occurred 1 in 100 by chance. A really convincing argument is a probability greater than 0.001 (1 in 1000 by chance).

Step #4: Evaluation of the statistical frequency distribution of the "test statistic"

We define a "test statistic" as the number we observe or calculate having completed a test experiment and having completed a statistical test from the test experiment. The documentation or derivation of the statistical test will include a written description and reference to the test procedure by which the numerical value of the test statistic is found (for example the F-ratio of the sub-image of a sub sample). "Test statistic" is not to be confused with statistical parameter. It is more common to derive test statistics from EM parameters, or ADR parametric relationships.

For the test statistic the Null hypothesis has to be tested to establish whether it is a unique situation or whether the relationship is common (i.e. no difference). In order to decide which values of the invention's EM test statistic are "common" and which are "rare", under our null hypothesis true (criteria for a yes answer) we need to know the frequency distribution (or probability density function) of the test statistic, or at least the "critical value" at the boundary between "common" and "rare". In general a whole range of probabilities of different situations may be calculated, but the critical values of the test statistic are usually tabulated in the expert system logic control and there will be a series of conditions to pass in the expert system logic before a yes/no answer can be guaranteed.

Step #5: Definition of the "Critical Region" (or region of rejection)

The critical region is the region of the frequency distribution of the test statistic which contains those extreme values of the test statistic associated with which, under Ho true there is a probability of occurrence of $p_a$ or less.

Step #6: Decision making or classification process

If the EM test experiment gives a value of the test statistic in the critical region then Ho is rejected. There are two possible explanations:

(a) Ho is actually true and a rare event has occurred by chance
(b) $H_0$ is false

When reporting a decision the size of the critical region used should never be omitted.

**Results**

One visual output following data processing is dubbed as a "Virtual Wellbore Log" chart. This shows material composition classifications and depths of the material scanned by the EM apparatus. Data can also be displayed in graph form as line spectra. The Virtual Wellbore Log output provides two-dimensional (2D) areal content using spectral analysis techniques.

When the 2D logs are integrated together spatially then the Invention provides three-dimensional (3D) volumetric content of the subsurface lithology. When time is added to the 3D volumetric content, four-dimensional (4D) data representation is produced.

The process described herein provides three outputs (image, material classification and thematic map). The output is pictorial and for subsurface mapping, for example, shows each and every major subsurface stratigraphic horizon down to total depth, classified and with thickness measured.

The type of materials or rocks at any distance or depth is classified with a high degree of certainty (eg. Sandstone, limestone, clay). A measure of moisture content of the material or rock at all depths, is provided.

Thresholds are set by training EM signals on material samples (such as core samples and hydrocarbon samples) either in a laboratory or at remote locations in the field. Thresholds are set for frequency, energy, phase and permittivity (dielectric) relationships.

Field training (or typecasting) is conducted in a similar manner, but by training on materials or borehole data live, in their natural environment (*in situ*).

In a Virtual Wellbore Log result, the following properties are shown:

- the general geologic subsurface layers
- vertical subsurface depth
- thicknesses of stratigraphic layers/horizons
- dielectric properties of each layer/horizon
- matching results against a predetermined materials database (such as Gas Show Indicators from a pre-determined materials database or rank matching of rocks from a pre-determined rocks database) correlated to the live data at this Log location.

For oil and gas exploration and appraisal applications, for example, the invention produces information of rock type, rock sequence, moisture content, dielectric permittivity, and presence of hydrocarbons with geographical coordinates.

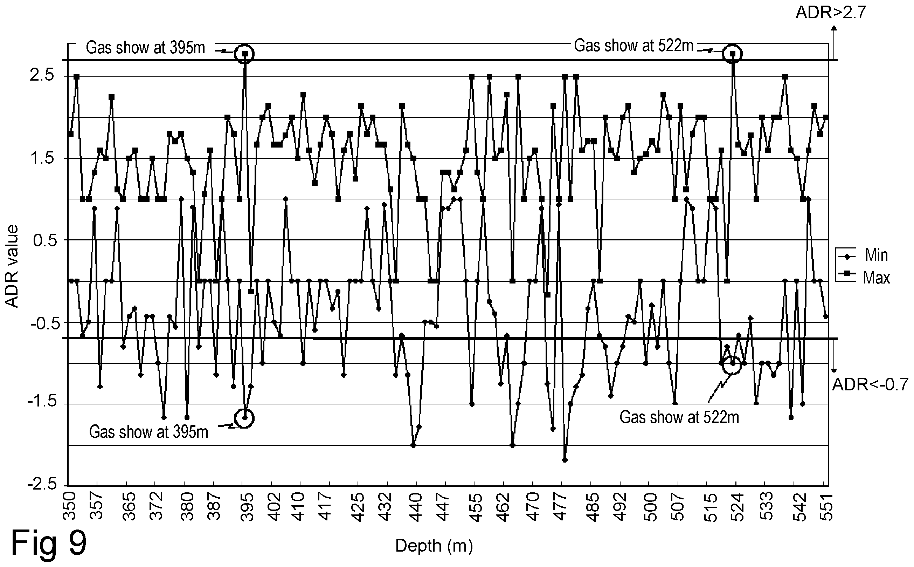

Figure 9 shows the Spectral Line output of the apparatus showing EM signal properties (e.g., energy, frequency, amplitude, phase) in the material(s) under inspection over distance (e.g., depths underground in geological applications).

In essence, the concepts herein provide the end users with enough depth and lithological information to reduce the requirement for appraisal drilling.

### Applications

This concepts herein have multiple applications. For example:

- Subsurface geological mapping;
- Subsurface minerals exploration, appraisal and mapping;
- Subsurface oil, gas, hydrocarbons, water exploration, appraisal and mapping;
- Non-invasive Medical imaging and material classification (e.g., imaging and diagnosing the human body or body parts in vivo and/or in vitro);
- Biological imaging and material classification;
- Industrial quality assurance of production lines of materials and parts
- Acoustic measurements for seismic applications.

### Claims

1. A method of determining subsurface composition of a surveyed region comprising the steps of:

using a transmitter (Tx) to transmit a pulsed electromagnetic signal (210) into the ground;
using a receiver (Rx, Rx', Rx") to detect a return signal (220) following interaction of said transmitted signal with features of the subsurface;
imaging a profile image of the subsurface;
calculating one or more spectra of said return signal, said one or more spectra comprising at least a phase-frequency spectrum based upon the variation of phase of the return signal in the frequency domain and an energy-frequency spectrum;
analysing said one or more spectra to determine a characteristic phase-frequency signature, and an energy-frequency signature for one or more layers of said subsurface; and
comparing said determined signatures of the one or more layers to a database of equivalent signatures of known materials in order to determine a composition of said one or more layers;
**characterized in that** said analysing step comprising defining said energy-frequency signature by energy changes at more than 10 different harmonics for each of more than 10 derivatives of the energy-frequency spectrum, such that said energy-frequency signature is defined by the sign of the energy change at each of said harmonics.

2. The method as claimed in claim 1 wherein said profile image is obtained by performing a profile scan, comprising repeating said transmit and detect steps at a plurality of different points over said subsurface, in each case with said transmitter and receiver being maintained at a set separation.

3. The method as claimed in claim 1 or 2 wherein said method comprises a further scan in order to obtain depth information for said profile image of the subsurface.

**4.** The method as claimed in claim 3 wherein said further scan comprises one of:

a Wide Angle Reflection and Refraction scan comprising repeating the transmit and detect steps at a plurality of different points over said subsurface, with each repetition being performed with either one of said transmitter and receiver being moved, and the other of said transmitter and receiver remaining stationary, or a common midpoint scan comprising repeating the transmit and detect steps with with said transmitter and receiver being moved apart from one another in equal distance steps, or at equal velocities, from a common point at each repetition.

**5.** The method as claimed in claim 3 wherein depth information is obtained using both ray tracing and Normal Move-out techniques and subsurface features are only attributed with depth information when the solutions using both techniques are in correlation.

**6.** The method as claimed in claim 3 wherein said further scan comprises a stare scan comprising repeating the transmit and detect steps with said transmitter and receiver being held at a fixed separation, and images obtained from a number of stare scans taken at different locations are added together to make a synthetic profile scan or WARR scan.

**7.** The method as claimed in any preceding claim wherein said step of analysing said one or more spectra comprises:

performing a statistical analysis of said one or more spectra, said statistical analysis includes at least one of: principal components analysis, maximum likelihood classification and multivariate classification; and/or frequency classification using energy bins and/or frequency bins.

**8.** The method as claimed in any preceding claim comprising performing a rank matching operation wherein each determined signature is compared against every other equivalent signature, and covariance and correlation matrices are computed.

**9.** The method as claimed in any preceding claim wherein said determined signatures are output as spectral lines and compared to a database of spectral lines in said comparison step.

**10.** A program carrier comprising computer instructions which, when run on an apparatus comprising a transmitter, a receiver and a processor, cause said apparatus to perform the method of any of claims 1 to 9.

**Patentansprüche**

**1.** Ein Verfahren zum Bestimmen der Zusammensetzung eines Untergrunds einer untersuchten Gegend, beinhaltend die folgenden Schritte:

Verwenden eines Senders (Tx) zum Senden eines gepulsten elektromagnetischen Signals (210) in den Boden; Verwenden eines Empfängers (Rx, Rx', Rx") zum Erfassen eines Rücksignals (220) im Anschluss an die Interaktion des gesendeten Signals mit Merkmalen des Untergrunds; Abbilden eines Profilbilds des Untergrunds; Berechnen eines oder mehrerer Spektren des Rücksignals, wobei das eine oder die mehreren Spektren mindestens ein Phasen-Frequenz-Spektrum auf der Basis der Phasenänderung des Rücksignals in dem Frequenzbereich und ein Energie-Frequenz-Spektrum beinhalten; Analysieren des einen oder der mehreren Spektren zum Bestimmen einer charakteristischen Phasen-Frequenz-Signatur und einer Energie-Frequenz-Signatur für eine oder mehrere Schichten des Untergrunds; und Vergleichen der bestimmten Signaturen der einen oder der mehreren Schichten mit einer Datenbank von äquivalenten Signaturen bekannter Materialien, um eine Zusammensetzung der einen oder der mehreren Schichten zu bestimmen; **dadurch gekennzeichnet, dass** der Analysierschritt das Definieren der Energie-Frequenz-Signatur durch Energieveränderungen bei mehr als 10 unterschiedlichen Harmonischen für jede von mehr als 10 Ableitungen des Energie-Frequenz-Spektrums beinhaltet, so dass die Energie-Frequenz-Signatur durch das Vorzeichen der Energieveränderung bei jeder der Harmonischen definiert wird.

**2.** Verfahren gemäß Anspruch 1, wobei das Profilbild durch das Durchführen eines Profilscans erhalten wird, beinhaltend das Wiederholen der Sende- und Erfassungsschritte an einer Vielzahl von unterschiedlichen Punkten über dem Untergrund, wobei der Sender und der Empfänger jeweils in einem festen Abstand behalten werden.

3. Verfahren gemäß Anspruch 1 oder 2, wobei das Verfahren einen weiteren Scan beinhaltet, um Tiefeninformationen für das Profilbild des Untergrunds zu erhalten.

4. Verfahren gemäß Anspruch 3, wobei der weitere Scan eines von Folgendem beinhaltet:

einen Weitwinkelreflexions- und -brechungsscan, beinhaltend das Wiederholen der Sende- und Erfassungsschritte an einer Vielzahl von unterschiedlichen Punkten über dem Untergrund, wobei bei der Durchführung jeder Wiederholung entweder der Sender oder der Empfänger bewegt wird und der andere von dem Sender und dem Empfänger stationär bleibt, oder
einen Scan mit gemeinsamem Mittelpunkt, beinhaltend das Wiederholen der Sende-und Erfassungsschritte, wobei bei jeder Wiederholung der Sender und der Empfänger in gleichen Distanzschritten oder mit gleichen Geschwindigkeiten von einem gemeinsamen Punkt auseinanderbewegt werden.

5. Verfahren gemäß Anspruch 3, wobei die Tiefeninformationen unter Verwendung von sowohl Strahlverfolgungs- als auch Normal-Move-Out-Techniken erhalten werden und Merkmale des Untergrunds nur dann Tiefeninformationen zugeschrieben werden, wenn die Lösungen unter Verwendung beider Techniken korrelieren.

6. Verfahren gemäß Anspruch 3, wobei der weitere Scan einen Stare-Scan beinhaltet, beinhaltend das Wiederholen der Sende- und Erfassungsschritte, wobei der Sender und der Empfänger in einem festgesetzten Abstand gehalten werden, und Bilder, die aus einer Anzahl von Stare-Scans erhalten wurden, die an verschiedenen Stellen aufgenommen wurden, zusammengefügt werden, um einen synthetischen Profilscan oder WARR-Scan zu erstellen.

7. Verfahren gemäß einem der vorhergehenden Ansprüche, wobei der Schritt des Analysierens des einen oder der mehreren Spektren Folgendes beinhaltet:
Durchführen einer statistischen Analyse des einen oder der mehreren Spektren, wobei die statistische Analyse mindestens eines von Folgendem beinhaltet:

Hauptkomponentenanalyse, Maximum-Likelihood-Klassifizierung und multivariate Klassifizierung; und/oder Frequenz-Klassifizierung unter Verwendung von Energie-Bins und/oder Frequenz-Bins.

8. Verfahren gemäß einem der vorhergehenden Ansprüche, beinhaltend das Durchführen eines Rangabgleichsvorgangs, wobei jede bestimmte Signatur mit jeder anderen äquivalenten Signatur verglichen wird und Kovarianz- und Korrelationsmatrizen errechnet werden.

9. Verfahren gemäß einem der vorhergehenden Ansprüche, wobei die bestimmten Signaturen als Spektrallinien ausgegeben und in dem Vergleichsschritt mit einer Datenbank von Spektrallinien verglichen werden.

10. Ein Programmträger, beinhaltend Computerbefehle, die, wenn sie auf einer Vorrichtung ausgeführt werden, die einen Sender, einen Empfänger und einen Prozessor beinhaltet, die Vorrichtung veranlassen, das Verfahren gemäß einem der Ansprüche 1 bis 9 durchzuführen

**Revendications**

1. Un procédé de détermination d'une composition souterraine d'une région prospectée comprenant les étapes consistant :

à utiliser un émetteur (Tx) afin d'émettre un signal électromagnétique pulsé (210) jusque dans le sol ;
à utiliser un récepteur (Rx, Rx', Rx") afin de détecter un signal de retour (220) à la suite d'une interaction dudit signal émis avec des particularités du souterrain ;
à imager une image de profil du souterrain ;
à calculer un ou plusieurs spectres dudit signal de retour, lesdits un ou plusieurs spectres comprenant au moins un spectre phase-fréquence basé sur la variation de phase du signal de retour dans le domaine fréquentiel et un spectre énergie-fréquence ;
à analyser lesdits un ou plusieurs spectres afin de déterminer une signature phase-fréquence caractéristique, et une signature énergie-fréquence pour une ou plusieurs couches dudit souterrain ; et

à comparer lesdites signatures déterminées des une ou plusieurs couches à une base de données de signatures équivalentes de matériaux connus de manière à déterminer une composition desdites une ou plusieurs couches ; **caractérisé en ce que** ladite étape d'analyse comprenant la définition de ladite signature énergie-fréquence par des changements d'énergie à plus de 10 harmoniques différents pour chaque dérivée de plus de 10 dérivées du spectre énergie-fréquence, de telle sorte que ladite signature énergie-fréquence est définie par le signe du changement d'énergie à chacun desdits harmoniques.

2. Le procédé tel que revendiqué dans la revendication 1 dans lequel ladite image de profil est obtenue en effectuant un balayage de profil, comprenant la répétition desdites étapes d'émission et de détection à une pluralité de points différents par-dessus ledit souterrain, avec dans chaque cas lesdits émetteur et récepteur maintenus à une séparation établie.

3. Le procédé tel que revendiqué dans la revendication 1 ou la revendication 2, ledit procédé comprenant un balayage supplémentaire de manière à obtenir des informations de profondeur pour ladite image de profil du souterrain.

4. Le procédé tel que revendiqué dans la revendication 3 dans lequel ledit balayage supplémentaire comprend un élément parmi :

   un balayage de réfraction et réflexion grand angle comprenant la répétition des étapes d'émission et de détection à une pluralité de points différents par-dessus ledit souterrain, chaque répétition étant effectuée avec soit ledit émetteur, soit ledit récepteur en cours de déplacement, et l'autre d'entre ledit émetteur et ledit récepteur restant stationnaire, ou
   un balayage de point milieu commun comprenant la répétition des étapes d'émission et de détection avec lesdits émetteur et récepteur en cours de déplacement l'un à l'écart de l'autre dans des étapes de distance égale, ou à des vitesses égales, à partir d'un point commun à chaque répétition.

5. Le procédé tel que revendiqué dans la revendication 3 dans lequel des informations de profondeur sont obtenues à l'aide de techniques à la fois de tracé de rayons et de courbure normale et des particularités souterraines sont seulement attribuées à des informations de profondeur lorsque les solutions en utilisant les deux techniques sont en corrélation.

6. Le procédé tel que revendiqué dans la revendication 3 dans lequel ledit balayage supplémentaire comprend un balayage soutenu comprenant la répétition des étapes d'émission et de détection avec lesdits émetteur et récepteur gardés à une séparation fixe, et des images obtenues d'un certain nombre de balayages soutenus pris à des emplacements différents sont ajoutées ensemble afin de produire un balayage WARR ou balayage de profil synthétique.

7. Le procédé tel que revendiqué dans n'importe quelle revendication précédente dans lequel ladite étape consistant à analyser lesdits un ou plusieurs spectres comprend :

   le fait d'effectuer une analyse statistique desdits un ou plusieurs spectres, ladite analyse statistique inclut au moins un élément parmi : une analyse de composants principaux, une classification de vraisemblance maximum et une classification multivariable ; et/ou
   une classification de fréquence en utilisant des gammes d'énergie et/ou des gammes de fréquence.

8. Le procédé tel que revendiqué dans n'importe quelle revendication précédente comprenant le fait d'effectuer une opération d'appariement de classement dans laquelle chaque signature déterminée est comparée à chaque autre signature équivalente, et des matrices de covariance et de corrélation sont calculées informatiquement.

9. Le procédé tel que revendiqué dans n'importe quelle revendication précédente dans lequel lesdites signatures déterminées sont sorties en tant que raies spectrales et comparées à une base de données de raies spectrales à ladite étape de comparaison.

10. Un support de programme comprenant des instructions informatiques qui, lorsqu'elles sont exécutées sur un appareil comprenant un émetteur, un récepteur et un processeur, amènent ledit appareil à effectuer le procédé de n'importe lesquelles des revendications 1 à 9.

Fig. 1

Fig. 2

P-Scan=Image

| Raw Pscan Data | Smoothing | Background Removal | Filtering | Image for Virtual Borehole Log |

WARR data = Depth

| Raw WARR Data | Smoothing | Background Removal | Filtering | NMO and Ray Trace | Time to Depth Conversion Data |

Vbore Logs

| Rank Matching | Energy & Frequency Log | Harmonic Energy Log | Dielectric Log | Virtual Borehole Log |

EP 2 862 003 B1

Fig. 3

Fig. 4

60

| 10 |
|----|
| 20 |
| 20 |
| 10 |
| 20 |
| 10 |
| 20 |
| 10 |
| 20 |
| 10 |
| 20 |
| 10 |
| 10 |
| 20 |
| 10 |
| 20 |
| 10 |
| 20 |
| 10 |
| 20 |
| 10 |
| 10 |
| 20 |
| 10 |
| 20 |
| 10 |
| 20 |
| 10 |
| 20 |
| 10 |
| 20 |
| 10 |
| 20 |
| 10 |
| 20 |
| 10 |
| 10 |

−

62

| 7  | 1 | 1 | 1 | 1 |
|----|---|---|---|---|
| 8  | 2 | 2 | 2 | 2 |
| 9  | 1 | 1 | 1 | 1 |
| 10 | 2 | 2 | 2 | 2 |
| 11 | 2 | 2 | 2 | 2 |
| 12 | 1 | 1 | 1 | 1 |
| 13 | 2 | 2 | 2 | 2 |
| 14 | 1 | 1 | 1 | 1 |
| 15 | 2 | 2 | 2 | 2 |
| 16 | 2 | 2 | 2 | 2 |
| 17 | 1 | 1 | 1 | 1 |
| 18 | 2 | 2 | 2 | 2 |
| 19 | 1 | 1 | 1 | 1 |
| 20 | 2 | 2 | 2 | 1 |
| 21 | 1 | 2 | 1 | 2 |
| 22 | 2 | 1 | 2 | 2 |
| 23 | 1 | 1 | 1 | 1 |
| 24 | 2 | 2 | 2 | 2 |
| 25 | 1 | 1 | 1 | 1 |
| 26 | 2 | 2 | 2 | 2 |
| 27 | 1 | 1 | 1 | 1 |
| 28 | 2 | 2 | 2 | 2 |
| 29 | 1 | 1 | 1 | 1 |
| 30 | 2 | 2 | 2 | 2 |
| 31 | 1 | 2 | 1 | 1 |
| 32 | 2 | 2 | 1 | 2 |
| 33 | 1 | 1 | 1 | 1 |
| 34 | 2 | 2 | 1 | 2 |
| 35 | 2 | 1 | 2 | 1 |
| 36 | 1 | 2 | 1 | 2 |
| 37 | 2 | 1 | 2 | 1 |
| 38 | 1 | 1 | 1 | 1 |

=

64

| 7  | 9  | 9  | 9  | 9  |
|----|----|----|----|----|
| 8  | 18 | 18 | 18 | 18 |
| 9  | 19 | 19 | 19 | 19 |
| 10 | 8  | 8  | 8  | 8  |
| 11 | 18 | 18 | 18 | 18 |
| 12 | 9  | 9  | 9  | 9  |
| 13 | 18 | 18 | 18 | 18 |
| 14 | 9  | 9  | 9  | 9  |
| 15 | 18 | 18 | 18 | 18 |
| 16 | 8  | 8  | 8  | 8  |
| 17 | 19 | 19 | 19 | 19 |
| 18 | 8  | 8  | 8  | 8  |
| 19 | 9  | 9  | 9  | 9  |
| 20 | 18 | 18 | 18 | 19 |
| 21 | 9  | 8  | 9  | 8  |
| 22 | 18 | 19 | 18 | 18 |
| 23 | 9  | 9  | 9  | 9  |
| 24 | 18 | 18 | 18 | 18 |
| 25 | 9  | 9  | 9  | 9  |
| 26 | 18 | 18 | 18 | 18 |
| 27 | 9  | 9  | 9  | 9  |
| 28 | 18 | 18 | 18 | 18 |
| 29 | 9  | 9  | 9  | 9  |
| 30 | 18 | 18 | 18 | 18 |
| 31 | 9  | 8  | 9  | 9  |
| 32 | 18 | 18 | 19 | 18 |
| 33 | 9  | 9  | 8  | 9  |
| 34 | 18 | 18 | 19 | 18 |
| 35 | 8  | 9  | 8  | 9  |
| 36 | 19 | 18 | 19 | 18 |
| 37 | 8  | 9  | 8  | 9  |
| 38 | 9  | 9  | 9  | 9  |

| 24 | 24 | 19 | 25 |
|----|----|----|----|

## Fig. 6

Fig. 7

Tx                                                    Rx

A                                                      E

                          F

B                         C                            D

# Fig. 5

Material
Data                          EM Signatures Database

                    Raw              Processed

                    EM Signal Parameters

              Energy      Phase      Frequency

                    Matching Methods
                                                      EM image and
                    Combine with Image        →        material
                                                      identification

# Fig. 8

Fig 9

EP 2 862 003 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0118533 A


**Non-patent literature cited in the description**

- **SEIGEL, S.** Nonparametric statistics for the behavioural sciences. Mcgraw-Hill, 1956, 6-17